# EUROPÄISCHE PATENTSCHRIFT

(11) **EP 3 016 794 B1**
(45) Veröffentlichungstag und Bekanntmachung des Hinweises auf die Patenterteilung: **05.08.2020**
(21) Anmeldenummer: 14734431.1
(22) Anmeldetag: 24.06.2014
(51) Int. Cl.: B29C 49/64, B29C 51/42, H05B 3/14, H05B 3/46, B29C 35/02

(54) **VORRICHTUNG ZUM BEHEIZEN VON VORFORMKÖRPERN ODER FLÄCHIGEN ODER VORGEFORMTEN HALBZEUGEN AUS THERMOPLASTISCHEM KUNSTSTOFF**
DEVICE FOR HEATING PREFORM BODIES OR FLAT OR PREFORMED SEMI-FINISHED PRODUCTS FROM THERMOPLASTIC MATERIAL
DISPOSITIF DE CHAUFFAGE DE PRÉFORMES OU DE DEMI-PRODUITS PLATS OU PRÉFORMÉS EN MATÉRIAU SYNTHÉTIQUE THERMOPLASTIQUE

(30) Priorität: 03.07.2013 DE 102013011306; 07.02.2014 DE 102014202302
(43) Veröffentlichungstag der Anmeldung: 11.05.2016
(60) Teilanmeldung: 20178532.6
(73) Patentinhaber: watttron GmbH, 01705 Freital (DE)
(72) Erfinder: CLAUS, Ronald, 01189 Dresden (DE); STEIN, Marcus, 01159 Dresden (DE); BACH, Sascha, 01189 Dresden (DE)
(74) Vertreter: Pfenning, Meinig & Partner mbB
(86) Internationale Anmeldenummer: PCT/EP2014/063293
(87) Internationale Veröffentlichungsnummer: WO 2015/000748

(56) Entgegenhaltungen:
- EP-A1- 0 970 798
- EP-A1- 1 509 384
- EP-A2- 2 447 038
- DE-A1-102008 062 199
- GB-A- 2 322 272
- US-A- 3 386 503
- US-A- 4 044 086
- US-A- 6 069 346

## Beschreibung

Die Erfindung betrifft eine Vorrichtung zum Beheizen von Formkörpern oder vorgeformten Halbzeugen aus thermoplastischem Kunststoff insbesondere Vorformlingen (Preformen) für die Anwendung in Blasumformern:
Zur Herstellung von Formteilen aus thermoplastischen Kunststoffen oder Glas findet der Streckblasformprozess verbreitet Anwendung. Insbesondere in der Getränkeindustrie werden Behälter, vorwiegend Flaschen unterschiedlichster Form und Größe nach diesem Verfahren hergestellt. Dabei werden mittels Spritzguss hergestellte Vorformlinge (Preform) verarbeitet, die einen bereits vollständig ausgeformten Kopfbereich (Flaschenöffnung) und einen im Streckblasprozess umzuformenden Grundkörper (Body) aufweisen. Der Grundkörper wird zunächst durch Erwärmung in einen formbaren Zustand gebracht und anschließend über eine Reckstange mechanisch gestreckt, bevor er mittels Über- bzw. Unterdruck expandiert wird. Bei der dabei stattfindenden Streckung des Kunststoffes kommt es entsprechend des Ausformprozesses und durch die zu erreichende Endform zu lokal unterschiedlichen Streckgraden, was zu einer inhomogenen Wanddickenverteilung führt. Eigenschaften, wie mechanische Beanspruchung oder Barrierewirkung so hergestellter Formkörper oder Behältnisse werden dadurch lokal entscheidend beeinflusst. Es wird daher mit unterschiedlichen Verfahren versucht, den Streckvorgang dahingehend zu verbessern, dass möglichst vorteilhafte (meist homogene) Wanddickenverteilungen erreicht werden können. Allerdings ist dies mit bekannten Verfahren nur im begrenzten Maß realisierbar. Darüber hinaus sind den bekannten Verfahren insbesondere im Hinblick auf Materialeinsparung (so genanntes Lightweighting) oder bei der Fertigung nicht rotationssymmetrischer Blasformkörper technische Schranken gesetzt, die neue technische Lösungen erfordern.

Einen Ansatz zur Lösung genannter Problemstellungen ist in der Verwendung von Heizsystemen zur Vorheizung der Vorformlinge zu sehen. Im Allgemeinen wird die Erwärmung oder Aufheizung der Vorformlinge mittels Infrarotstrahlung erreicht. Dabei werden die zum Einsatz kommenden Strahler in kontinuierlich arbeitenden Anlagen zu einer linearen Heizstrecke aufgereiht. Die vorzugsweise am Kopfbereich fixierten Vorformlinge bewegen sich dabei rotierend durch den Heiztunnel, wodurch sie am Umfang gleichmäßig erwärmt werden. Ein Energieeintrag erfolgt dabei lediglich von der Außenseite der Vorformlinge. Um eine Überhitzung der Oberfläche zu vermeiden, wird Luft zum Kühlen in den Heiztunnel eingeleitet und die Vorformlinge damit umströmt. Diese zusätzlich notwendige Oberflächenkühlung und der geringe energetische Wirkungsgrad der Strahlungsheizer (von ca. 30%) begründen den geringen Gesamtwirkungsgrad des beschriebenen Heizprozesses. Für ein ausreichend homogenes in die Tiefe eines Vorformlings gehendes Temperaturprofil bedarf es daher einer entsprechend langen Erwärmungszeit, die zusammen mit der vorgegebenen Ausbringung die Mindestlänge der Heizstrecke festlegt. Besonders bei Hochleistungsmaschinen sind dadurch große Aufstellflächen für die Heizeinrichtung notwendig.

War bislang das vorwiegende Ziel von Erfindungen im Bereich der Erwärmung von Vorformlingen, wie beispielsweise in DE 100 20 410 B4**,** möglichst homogene Temperaturprofile im gesamten Vorformling zur erzeugen, sind in der letzten Zeit verschiedene Möglichkeiten beschrieben worden, definierte inhomogene Temperaturprofile in den Vorformling einzutragen. Der Nutzen einer solchen inhomogenen Erwärmung liegt in der direkten Beeinflussung des Streckverhaltens durch die stark temperaturabhängigen mechanischen Materialeigenschaften der Vorformlinge. Der Verformungswiderstand des Materials kann durch eine zonale Temperaturerhöhung gezielt lokal geschwächt werden, was eine besonders starke Streckung zu Beginn des Ausformprozesses und eine geringere Wandstärke am Ende des Formvorganges zur Folge hat. Gegensätzliches Verhalten ist bei auftretenden Dünnstellen, zum Beispiel in Eckbereichen des Formkörpers, durch eine geringere Erwärmung, die zu einem "Aufdicken" dieser Bereiche führt, realisierbar.

Aus der Patentschrift DE 197 36 462 C2 ist eine Heizvorrichtung bekannt, die zum Einbringen definierter Temperaturprofile bzw. Temperaturfelder, über die Länge des Grundkörpers verteilte Strahlung unterschiedlicher Intensität nutzt. Dies führt zu einer inhomogenen Erwärmung des Vorformlings. Nachteilig ist dabei, dass sich die Heizzonen bzw. Heizbereiche nur grob definieren lassen. Auch sind die maximal möglichen Temperaturgradienten an den Übergängen begrenzt, wodurch Vorformlinge geringer Größe und kleine Konturen des Formkörpers, wie beispielsweise Ecken, nicht gezielt beeinflusst werden können. Weiterhin ist eine inhomogene Erwärmung in Radialrichtung mit diesem Verfahren nicht möglich.

Ein weiteres Verfahren ist in DE 10 2010 048 211 A1 beschrieben. Darin wird vorgeschlagen, dem homogenen Heizprozess einen lokalen Kühlprozess folgen zu lassen. Greifer, an deren Innenseite Kühlflächen ausgebildet sind, umklammern den Vorformling und führen so zu einer lokalen Abkühlung. Nachteilig wirken sich dabei der dafür notwendige zusätzliche Prozessschritt und die damit erhöhte Anlagenkomplexität, sowie die weitere Verschlechterung des energetischen Wirkungsgrades aus. Zusätzlich kann nur mit einer sehr aufwendigen Bewegungsführung eine Oberflächenbeschädigung des Vorformlings während des Greifens verhindert werden.

Ein weiteres Verfahren zur Erzeugung einer zonal unterschiedlichen Temperaturverteilung wird in DE 101 06 607 A1 beschrieben. Darin wird vorgeschlagen, ein Lasersystem zu nutzen. Durch die Einbringung von unterschiedlichen Strahlungsdosen können auch sehr kleine Bereiche auf eine höhere oder geringere Temperatur eingestellt werden. Als nachteilig stellt sich bei dieser Variante zusätzlich zu den sehr hohen Investitionskosten für Strahlenquelle und Spiegelleitsystem, die zur Sicherstellung der optischen Eigenschaften nur begrenzt mögliche Einbringung von Energie dar. Zusätzlich ist die Regelung zur genauen Temperatureinstellung nur mit hohem regelungstechnischen Aufwand zu realisieren. Durch die punktuelle Einbringung der Energie und die dreidimensionale Geometrie des Vorformlings sind vergleichsweise hohe Heizzeiten notwendig, die lange Taktzeiten und damit geringen Arbeitsgeschwindigkeiten verursachen.

Neben den berührungslos arbeitenden Verfahren bestehen Ansätze zur kontaktbehafteten Wärmeübertragung. Diese betreffen allerdings lediglich den Herstellprozess von Kunststoffteilen im Spritzgussverfahren. So beschreibt EP 0713755 B1 eine Vorrichtung zur Herstellung von Kunststoffteilen mittels einer temperierbaren Form. Diese besitzt eine innenliegende Schicht, die homogen erwärmt und nach Eingeben des Kunststoffes gleichmäßig abgekühlt werden kann.

Einen ähnlichen Ansatz verfolgt die EP 2269793 A1**.** Diese technische Lösung zielt ebenfalls auf eine gleichmäßige Temperierung einer Kavität ab, wobei diese vorzugsweise zum Herstellen von optischen Linsen oder Kunststoffteilen im Spritzgussverfahren eingesetzt wird. Dabei ist die Heizschicht als eine homogene flächige Beschichtung ausgeführt und wird über Kontaktelemente mit elektrischer Energie gespeist.

Eine Verfahrensvariante einer unmittelbaren Verkettung des vorgelagerten Herstellungsprozesses des Vorformlings durch Spritzguss mit dem Streckblasprozess wird in DE 10 2010 001 096 A1 offenbart. Hierbei wird eine Gießform koaxial oberhalb der Blasform angeordnet und zu Beginn mit flüssigem Kunststoff gefüllt. Der dadurch entstandene Vorformling wird durch Öffnen der Form und Überführung in die Blasform unmittelbar im Anschluss an das Urformen blasgeformt. Die gesamte Gießform wird entsprechend des zum Umformvorgang gewünschten Temperaturprofils des Vorformlings temperiert. Nachteilig wirkt sich hierbei die erhebliche thermische Masse der Gießform aus, die einer schnellen Abkühlung einer Kunststoffmasse und einer lokal aufgelösten Temperierung des Vorformlings entgegenwirkt.

US 4,044,086 A offenbart eine Vorrichtung nach dem Oberbegriff des Anspruchs 1. Dabei soll ein Temperaturgradient zwischen einer Innen- und einer Außenseite eines zu verformenden Rohlings für ein Verformen eingehalten sein.

Die EP 0 970 798 A1 beschreibt eine Fließbandvorrichtung zur Erwärmung eines thermisch formbaren Materials.

Die EP 2 447 038 A2 zeigt eine Blasmaschine in Modulbauweise.

Die EP 1509 384 A1 betrifft Möglichkeiten für die Fertigung von Reifen aus Gummi.

Ein Verfahren und eine Heizeinrichtung zum Thermoformen sind aus DE 10 2008 062 199 A1 bekannt.

Ausgehend vom Stand der Technik liegt der Erfindung daher die Aufgabe zugrunde, eine verbesserte Vorrichtung zur Verfügung zu stellen, mit der eine effiziente und lokal definierte Beheizung eines Vorformkörpers erreicht werden kann.

Die Aufgabe wird erfindungsgemäß mit einer Vorrichtung mit den Merkmalen des Anspruchs 1 gelöst. Weitere Ausführungsformen der erfindungsgemäßen Vorrichtung können mit in untergeordneten Ansprüchen bezeichneten Merkmalen realisiert werden.

Die erfindungsgemäße Vorrichtung zum Beheizen von Vorformkörpern aus thermoplastischem Kunststoff für die Anwendung beim Blasumformen oder Thermoformen weist einen Grundkörper und einen weiteren Grundkörper auf, auf deren Oberfläche mindestens eine erste Schicht ausgebildet ist, die mehrere elektrische Heizwiderstände in Form flächig geometrisch angeordneter Leiterschleifen aufweist. Die Grundkörper weisen ferner Kontaktelemente auf, über die die Heizwiderstände mit einer Stromquelle verbindbar sind, wobei ein definiertes Temperaturprofil mit lokal differenzierter Temperaturverteilung generierbar ist, das über eine äußere auf der ersten Schicht ausgebildete Kontaktschicht, durch Kontaktieren mit der Oberfläche eines Formkörpers, auf den Formkörper übertragbar ist. Es besteht dabei die Möglichkeit, allein oder zusätzlich die Übertragung eines definierten Temperaturprofils auf den Vorformköper berührungslos durch Nutzung von Konvektion und/oder thermischer Strahlung zu erreichen. In diesem Fall ist der Vorformkörper in einem Abstand zu der/den Kontaktschichten angeordnet. Der Kern der vorliegenden Erfindung liegt in einer Vorrichtung, die als Kontaktheizer ausgebildet ist, wobei ein auf einem Grundkörper generiertes Temperaturprofil in einer erfindungsgemäßen Alternative durch Kontakterwärmung auf den entsprechenden Vorformkörper oder ein Halbzeug übertragbar ist. Ein Halbzeug kann dabei ein bereits vorgeformtes Element eines thermoplastischen Kunststoffs sein, das nach der lokal gezielten Erwärmung mittels der erfindungsgemäßen Vorrichtung unter Einsatz mindestens eines Formwerkzeugs umgeformt werden kann.

Bei einer Erwärmung mit Übertragung eines definieren Temperaturprofils kann durch entsprechende Anordnung, Ausbildung und Dimensionierung einer oder mehrerer Leiterschleife(n) eine im Vergleich zu herkömmlich eingesetzten Infrarotstrahlern oder Halogenlampen erhöhte Ortsauflösung, ohne zusätzliche optische Elemente erreicht werden, indem ein kleiner Abstand von leitenden Bereichen von Leiterschleifen eingehalten worden ist, mit denen eine Erwärmung von Kontaktschichten erreichbar ist.

Ein vorzugsweise definiertes Temperaturprofil wird dadurch erreicht, dass an den Kontaktelementen ein regelbarer elektrischer Strom bzw. eine regelbare elektrische Spannung angelegt wird, infolgedessen sich die in einer vorgegebenen Weise flächig über die Oberfläche des Grundkörpers erstreckende mindestens eine Leiterschleife des Heizwiderstandes erwärmt und bevorzugt eine lokal differenzierte Erwärmung erreicht werden kann. Ein Temperaturprofil sollte dabei unter Berücksichtigung der geometrischen Gestalt, der Dimensionierung und/oder den lokal unterschiedlichen Erfordernissen für die Umformung eines jeweiligen Vorformkörpers definiert.

Die äußere Kontaktschicht korrespondiert mit mindestens einem Teilbereich der Oberfläche des Vorformkörpers. Der Grundkörper und zumindest die äußere Kontaktfläche können auch so ausgebildet sein, dass sie mit mindestens einem Teilbereich derinneren Oberfläche des Formkörpers korrespondieren. Der Grundkörper ist aus einem temperaturstabilen Materialaus Keramik gebildet .

Unter anderen keramischen Werkstoffen kann ein Grundkörper aus LTCC-oder HTCC-Keramik gebildet sein. Es sind elektrisch leitende Verbindungen durch den keramischen Werkstoff mittels Durchkontaktierungen (VIA's) ausgebildet.

Die Verwendung der erfindungsgemäßen Vorrichtung führt zu Verbesserungen in Prozessstabilität und Produktqualität infolge einer verbesserten Reproduzierbarkeit des Temperaturprofils. Weitere Vorteile der erfindungsgemäßen Vorrichtung liegen in einer Vergrößerung des Anwendungsbereichs des Streckblasprozesses durch ein lokal hochaufgelöstes Temperaturprofil entlang der Leiterschleife des Heizwiderstandes sowie in einer gesteigerten Effizienz durch Reduktion der notwendigen Heizenergie, Heizzeit und damit verbundenen reduzierten Taktzeit.

In der vorliegenden Erfindung sind mehrere Heizwiderstände jeweils einzeln ansteuerbar. Bei Einsatz von Grundkörpern an denen mehrere einzeln ansteuerbare Heizwiderstände vorhanden sind, kann eine leichte Anpassung an geänderte Vorformkörper oder andere Produkte, was deren Geometrie und die Dimensionierung betreffen kann, erreicht werden, indem eine entsprechend angepasste Ansteuerung der einzelnen Heizwiderstände vorgenommen wird, bei der lediglich das dafür erforderliche Temperaturprofil eingestellt wird. Eine Anpassung kann auch durch einen modularen Aufbau erreicht werden. Dabei kann mindestens ein Grundkörper aus mehreren miteinander verbindbaren Einzelmodulen gebildet sein, wobei auf den Einzelmodulen jeweils mindestens ein Heizwiderstand vorhanden ist. Je nach Art, Größe, Form und Anzahl der Einzelmodule kann ein angepasster Grundkörper für die Herstellung eines spezifischen Produkts zur Verfügung gestellt werden. Einzelmodule können gleich aber auch unterschiedlich ausgebildet sein.

Sowohl bei einem einzigen Grundkörper als Monolith, wie auch bei Einzelmodulen kann dann jeweils eine Anordnung von Heizwiderständen gewählt werden, bei der die Heizwiderstände jeweils gleich ausgebildet und in jeweils gleichen Abständen zueinander angeordnet sind. Eine Anpassung an das für ein Produkt spezifische gewünschte Temperaturprofil kann dabei allein durch die Ansteuerung der einzelnen Heizwiderstände erreicht werden.

Unabhängig von der äußeren Erscheinungsform der Vorrichtung, die vorzugsweise durch den Grundkörper vorgegeben sein kann, kann die Vorrichtung aus mindestens einem auf dem Grundkörper ausgebildeten bzw. aufgebrachten Mehrschichtverbund bestehen. Dabei sollen die in der ersten Schicht eingebrachten bzw. aufgebrachten Leiterschleifen der Heizwiderstände aus einem dotierten Keramik- oder Polymerwerkstoff gebildet sein, der auf einem elektrisch isolierten Träger aufgebracht ist. Alternativ, können die elektrischen Leiterschleifen für Heizwiderstände auch aus einer Metall- oder elektrisch leitenden Oxidschicht gebildet sein. Elektrische Heizwiderstände weiseneine Dicke im Bereich 1 µm bis 100 µm und eine Breite im Bereich 0,01 mm bis 5 mm auf.Zusätzlich kann der Träger auf der dem Grundkörper zugewandten Seite auch thermisch isoliert sein. Zur Ausbildung des definierten Temperaturprofils ist die Leiterschleife daher flächig geometrisch strukturiert angeordnet. Definierte Temperaturzonen können sich beispielsweise durch eine definierte bahnförmige, mäanderförmige und/oder spiralförmige Anordnung der Leiterschleife auf der Oberfläche des Grundkörpers ergeben.

Insbesondere bei einer Übertragung eines gewünschten Temperaturprofils durch Ausnutzung von Konvektion und/oder thermischer Strahlung kann der mindestens eine Heizwiderstand oder es können mehrere Heizwiderstände so angeordnet, ausgebildet und/oder betreibbar sein, dass infolge von Konvektion und/oder thermischer Strahlung ein definiertes Temperaturprofil mit lokal differenzierter Temperaturverteilung auf den Vorformkörper oder ein Halbzeug übertragen wird. So kann mindestens eine Leiterschleife entsprechend auf einer Oberfläche eines Grundkörpers geführt oder ausgebildet sein, dass in bestimmten Bereichen eine Erwärmung der Kontaktschicht erfolgt. Andere Bereiche werden dabei nicht oder nur geringer erwärmt, so dass von dort ausgehend Bereiche eines Vorformkörpers oder Halbzeugs nicht oder auf eine geringere Temperatur erwärmt werden, als in Bereichen in denen eine Leiterschleife mit größerer Fläche oder mit einer Leiterschleife, die z.B. mäanderförmig ausgebildet ist, und bei der kleinere Abstände zwischen nebeneinander ausgebildeten/angeordneten Bereichen einer Leiterschleife eingehalten sind. Eine lokal differenzierte Erwärmung kann beispielsweise auch erreicht werden, wenn eine Leiterschleife mit unterschiedlichen Querschnittsflächen für die elektrische Leitung und/oder durch unterschiedliche Werkstoffkonsistenz, die zu lokal unterschiedlichen elektrischen Widerständen führt, eingesetzt wird. Insbesondere bei mehreren Leiterschleifen besteht die Möglichkeit, diese individuell anzusteuern, so dass eine oder mehrere entsprechend in Bezug zu einem Vorformkörper angeordnete Leiterschleifen mit unterschiedlicher elektrischer Energie oder Leistung betrieben werden, wodurch auch dadurch Bereiche eines Vorformkörpers oder Halbzeugs auf unterschiedliche Temperaturen erwärmt werden können.

Durch eine lokal definiert einstellbare Temperatur an Kontaktschichten, was insbesondere durch eine lokal differenzierte Steuerung oder Regelung der Leiterschleifen zugeführten Elektroenergie erreichbar ist, kann das gewünschte definierte Temperaturprofil eingehalten und übertragen werden. Durch den jeweiligen Energieeintrag verändern sich die Intensität der emittierten thermischen Strahlung oder der durch thermische Leitung bei Kontakt übertragbaren Temperaturen lokal differenziert.

Zur Erhöhung der Effektivität bei einer Erwärmung unter Nutzung von thermischer Strahlung kann ein geeigneter Werkstoff oder Werkstoffgemisch für die Kontaktschichten gewählt werden. Kontaktschichten können auch mit einem entsprechenden Werkstoff beschichtet sein. Bei einem Werkstoffgemisch können geeignete chemische Elemente oder chemische Verbindungen in einer Matrix enthalten oder darin eingebettet sein. Die Auswahl sollte dabei so erfolgen, dass bei angelegter elektrischer Spannung an Leiterschleifen zu einer Erwärmung der Kontaktschichten ggf. mit der Beschichtung darauf und damit zu einer Emission thermischer Strahlung führt. Die thermische Strahlung liegt dabei in einem Wellenlängenbereich, bei der sie vom Werkstoff des Vorformkörpers mit mindestens 50 %, bevorzugt mit mindestens 70 % und besonders bevorzugt mit mindestens 80 % und ganz besonders bevorzugt mit mindestens 90 % absorbiert wird.

Bei einer Erwärmung unter Nutzung von Konvektion und/oder thermischer Strahlung kann ein Vorformkörper auch zwischen mit Kontaktschichten versehenen Elementen hindurch bewegt werden. Mit den Elementen kann quasi ein Tunnel gebildet sein, durch den Vorformkörper bei der Übertragung eines Temperaturprofils translatorisch hindurch bewegt werden können. Dabei können Vorformkörper auch um eine Achse rotieren, die bevorzugt senkrecht zur translatorischen Bewegungsrichtung ausgerichtet ist. Ein Vorformkörper kann aber auch in eine Vorrichtung hinein bewegt werden, um eine Übertragung eines Temperaturprofils zu erreichen. Dabei kann eine lokal differenzierte Erwärmung allein an der äußeren Oberfläche erfolgen. Es besteht aber auch die Möglichkeit zusätzlich oder allein die innere Oberfläche eines Vorformkörpers zu erwärmen, indem ein Grundkörper in Form eines Dornes durch eine Öffnung in das Innere des Vorformkörpers eingeführt wird.

Es ist weiterhin möglich, dass die Leiterschleife des elektrischen Heizwiderstands direkt, beispielsweise als Aufdruck auf der Oberfläche des Grundkörpers aufgebracht ist. In diesem Fall ist es besonders vorteilhaft, wenn der Grundkörper aus einem elektrisch isolierenden Material gebildet ist, so dass sich die darauf aufgedruckten Leiterschleifen elektrisch nicht beeinflussen.

Es besteht die Möglichkeit, definierte Temperaturprofile oder Heizzonen mit nur einer Leiterschleife eines Heizwiderstandes (Temperaturfelder durch unstetige Querschnittsfläche des Grundkörpers oder durch gezielte geometrische Anordnung der Leiterschleife) oder durch Kombination mehrerer Leiterschleifen (mehrerer Heizwiderstände) auszubilden. Einzelne Leiterschleifen können separat kontaktiert und damit unabhängig voneinander mit elektrischem Strom beaufschlagt werden. Entsprechend eines vorher zu definierenden Temperaturprofils oder Heizlayouts, kann der Vorformling oder ein Halbzeug gezielt inhomogen erwärmt werden. Für den Fall, dass mehrere Leiterschleifen mehrerer Heizwiderstände verwendet werden, kann der Grundkörper eine entsprechende Anzahl von Kontaktelementen aufweisen, über die die einzelnen Leiterschleifen der Heizwiderstände unabhängig voneinander mit einer regelbaren Stromquelle verbindbar sind.

In einer Ausführungsform der erfindungsgemäßen Vorrichtung kann die mindestens eine Leiterschleife des Heizwiderstandes in eine Matrix eingebettet sein. Dabei kann die äußere Kontaktschicht Eigenschaften, wie Verschleißfestigkeit, geringe Haftneigung, guter Wärmeübergang und vorzugsweise Elastizität zur Anpassung an die Vorformkörper- oder Halbzeugoberfläche aufweisen bzw. eine Kompensation von Dickenschwankungen der eingesetzten Halbzeuge oder Vorformkörper ermöglichen.

Das auf dem Grundkörper aufgebrachte bzw. ausgebildete Mehrschichtgebilde aus erster Schicht und Kontaktschicht kann noch weitere Funktionsbausteine bzw. Schichten enthalten. So kann der Grundkörper eine weitere zwischen der ersten- und der Kontaktschicht ausgebildete zweite Schicht aufweisen, in der Kanäle und Anschlüsse zum Leiten von Fluid (Gase oder Flüssigkeiten), insbesondere zum Leiten von Kühlmittel ausgebildet sind. Zum gezielten Zu- und/oder Abführen von Wärme können auch Peltier-Elemente eingesetzt werden, die innerhalb einer der Schichten oder in einer eigenen Schicht angeordnet sind. Solche Peltier-Elemente können dann auch über die Kontaktelemente des Grundkörpers mit elektrischem Strom versorgt werden.

Ferner können in mindestens einer der auf der Oberfläche des Grundkörpers ausgebildeten Schichten oder Beschichtungen und/oder in einer weiteren dritten Schicht Sensoren zur Erfassung von Temperatur und/oder Anpressdruck angeordnet sein. Das Einbringen einer solchen Schicht ermöglicht z.B. die unabhängige Erfassung und damit Regelung der Temperaturen des/der elektrischen Leiterschleifen des/der Heizwiderstandes/Heizwiderstände. Zur Temperaturbestimmung kann auch der elektrische Widerstand an dem/den Heizwiderstand/-ständen bestimmt werden, da sich dieser temperaturabhängig ändert.

Auch mit weiteren Schichten, wie zum Beispiel Isolierschichten, Abdeck- und Schutzschichten reflektierenden Schichten können vorteilhafte Zusatzfunktionalitäten erzielt werden.

Bei einer weiteren vorteilhaften Ausführungsform der erfindungsgemäßen Vorrichtung weisen der Grundkörper und sämtliche auf ihm aufgebrachte oder ausgebildete Schichten oder Beschichtungen eine Porosität und/oder Kanäle auf, durch die eine Luftströmung zur Erzeugung eines Unter- oder Überdrucks realisierbar ist. Mithilfe eines Unterdruckes kann die Kontaktbedingung während des Aufheizvorganges verbessert und der Wärmeübergang optimiert werden. Hingegen ist der Einsatz eines Überdruckes beispielsweise nach Beendigung der Vorwärmung vorteilhaft, um eine möglichst gute Ablösung ohne Beschädigung der Oberfläche des Vorformlings oder Halbzeugs zu gewährleisten, wenn eine Übertragung eines Temperaturprofils bevorzugt durch Kontakterwärmung erreicht werden soll. Unter Nutzung einer Fluid-, insbesondere einer Luftströmung kann auch eine lokal differenzierte Kühlung erreicht werden.

Zusätzlich zu der vorgeschlagenen vollständigen Aufheizung des Vorformlings auf die Umformtemperatur und das Umformtemperaturprofil kann die Kontakterwärmung und/oder die Erwärmung unter Nutzung von Konvektion und/oder thermischer Strahlung auch als zwischengelagerter Prozessschritt ausgeführt werden. Dabei wird ein zuvor auf ein Grundniveau temperierter Vorformling erst durch die Kontaktierung, durch Konvektion und/oder mittels thermischer Strahlung, die ausgehend von Kontaktschichten oder Oberflächen von Kontaktschichten emittiert und dadurch auf das endgültige Temperatur profil erwärmt wird.

Für eine weitere Ausführungsform kann es vorteilhaft sein, wenn der Mehrschichtverbund, der mindestens aus der ersten- und der äußeren Kontaktschicht besteht, auf einer ebenen Fläche ausgebildet ist, auf der der Vorformling im Heizprozess mit seiner äußeren Kontur abgerollt wird. Dies stellt unter anderem eine weitere vorteilhafte Variante zum nachträglichen Aufbringen eines Temperaturprofils in einen zuvor auf ein Grundniveau vorgewärmten Vorformlings dar.

Auch eine direkte Kombination mit einer weiteren herkömmlichen Heizquelle zum hybriden Aufwärmen eines Vorformlings kann eine vorteilhafte Ausführungsform sein. So ist beispielsweise eine äußere Einbringung von Strahlungsenergie mittels bekannter Infrarotstrahler/Quarzstrahler und eine innere Erwärmung durch den als Dorn ausgeführten ersten Grundkörper denkbar. Somit ist es gegenüber dem ausschließlichen Einsatz von Infrarotstrahlern möglich, die Aufheizzeit durch die zusätzliche Erwärmung von Innen deutlich zu reduzieren.

Für eine optimale Erwärmung einer Fläche mittels Kontakterwärmung ist ein vollflächiger Kontakt der Grundkörper bzw. äußeren Kontaktfläche mit der Vorformling- oder Halbzeugoberfläche von entscheidender Bedeutung. Aus diesem Grund können die Grundkörper der erfindungsgemäßen Vorrichtung eine integrierte Funktionalität eines Toleranzausgleiches aufweisen. Eine Variante besteht in der Segmentierung der Oberfläche des Grundkörpers bzw. der äußeren Kontaktfläche des Grundkörpers, um diese kraftschlüssig vollflächig mit der Oberfläche des Vorformlings oder Halbzeugs in Kontakt zu bringen. Dies kann beispielsweise mit einem mechanischen Federelement (Federlagerung), einem pneumatischen- (Luftkissen) oder hydraulischen Puffer realisiert sein. Dadurch kann sich die Oberfläche beim Andrücken an die tatsächliche äußere Kontur des Vorformlings anpassen. Vorteilhaft ist weiterhin, wenn die äußere Kontaktschicht flexibel ausgebildet ist und durch elastische Verformung einen Toleranzausgleich ermöglicht. Hierfür können entsprechende elastische Polymere zum Einsatz kommen.

Ein ähnliches Verhalten kann auch durch den Einsatz von elektrisch leitfähigen und dehnbaren Polymerwerkstoffen als Heizwiderstands- bzw. Leiterschleifenmaterial realisiert werden. Die dadurch ebenfalls dehnbar ausgeführte Heizschicht (erste Schicht) kann sich durch äußere Kraftaufbringung an die Oberfläche des Vorformlings oder Halbzeugs anpassen. Durch den verformbaren Mehrschichtverbund kann die beheizende Oberfläche auch durch eine aufgebrachte Druckbelastung expandiert und an die Vorformkörperoberfläche angedrückt werden.

Mit der erfindungsgemäßen Vorrichtung können vorzugsweise Vorformlinge und Halbzeuge beheizt werden, die aus einem thermoplastischen Kunststoff gebildet sind und nach dem Heizvorgang einem Streckblas- bzw. Blasformprozess zugeführt werden. Es können jedoch auch Vorformlinge und Halbzeuge beheizt werden, die aus Glas, Metall, faserbasierten Material und Verbünden daraus gebildet sind.

Mit Einsatz der Erfindung besteht die Möglichkeit, auf eine Rotation bei der Erwärmung von Vorformkörpern zu verzichten und trotzdem eine über die gesamte erforderliche Oberfläche bzw. in entsprechenden Volumenbereichen des jeweiligen Vorformkörpers ausreichende Erwärmung zu erreichen. Dadurch ist der apparatetechnische Aufwand reduziert und es ist kein anfälliger Rotationsantrieb erforderlich.

Vorteilhaft können auch nichtrotationssymmetrische Vorformkörper in der gewünschten definierten Form erwärmt werden, ohne dass Temperaturabweichungen vom gewünschten Temperaturprofil auftreten, was bei herkömmlichen technischen Lösungen nicht oder nur unzulänglich möglich ist.

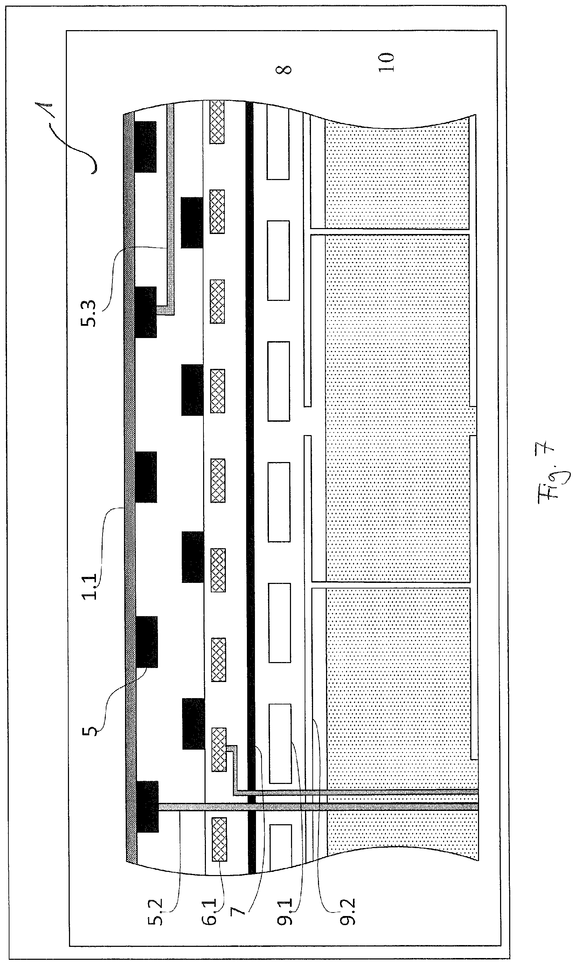

Bei der Erfindung können mehrdimensionale, mittels Druckverfahren herstellbare, keramische Heizsysteme für die Aufheizung (lokal differenzierte Erwärmung) von Vorformkörpern oder Halbzeugen aus thermoplastischem Kunststoff genutzt werden. Dazu sind dünne Heizleiter in Form von dünnen Schichten auf eine keramische oder isolierte metallische Platte aufgedruckt. Die Heizwiderstände sind durch feine, wenige Mikrometer dicke und zehntel-Millimeter breite linien- bzw. mäanderförmige elektrische Leiterbahnen gekennzeichnet. Der Wärmeeintrag kann hier durch die nahezu freie Gestaltbarkeit der Heizleistung auf der Fläche (Heizbild) lokal gezielt gesteuert oder auch geregelt werden. Es besteht die Möglichkeit, einen Heizkreis oder verschiedene Heizkreise, die mit jeweils einem oder mehreren Heizwiderständen gebildet sind, zu realisieren und separat anzusteuern. Demnach ist es möglich, Heizwiderstände oder Heizkreise als Pixel auszuführen und diese in Form einer Matrix anzuordnen. Der Aufbau als Multilayerheizsystem ermöglicht darüber hinaus eine vertikale Kaskadierung (Stacking) von Heizwiderständen, und Funktionsschichten (mit Sensoren, Isolations- oder Wärmeleitbereichen, Peltierelemente, usw.) wodurch ein hohes Maß der Flexibilisierung erreicht werden kann. In Figur 7 ist ein möglicher Aufbau dargestellt.
Die Energieübertragung kann dabei sowohl im Kontakt zwischen Kontaktfläche und Halbzeug, als auch über Strahlung oder Konvektion erfolgen.
Der temperaturabhängige Widerstand der Heizwiderstände kann ebenso zur Temperaturerfassung und -regelung verwendet werden, wie der Einsatz von Temperatursensoren, die in weiteren Funktionsebenen realisiert werden können. Infolge des vergleichsweise geringen Querschnitts der Heizwiderstände und der thermischen Entkopplung der Grundkörper ist eine hochdynamische Temperaturregelung möglich. Es besteht weiterhin die Möglichkeit die Heizwiderstände als Impulsheizung zu betreiben. Bei der Ansteuerung der einzelnen Heizwiderstände können die angestrebten Temperaturen der benachbarten Heizwiderstände berücksichtigt werden.
Die elektrische Ansteuerung kann u.a. analog, wie impulsgeregelt erfolgen. Dabei kann jeder Heizwiderstand bzw. jeder Heizkreis von einem separaten Netzteil und oder Regler einzeln versorgt werden oder auch gruppenweise zusammengefasst von einem Netzteil oder Regler beeinflusst werden. Hierbei ist es denkbar, durch eine hochdynamische Weiterschaltung der Leitung zwischen den Heizwiderständen bzw. Heizkreisen, jeden einzelnen nur mit einem kurzen Energieimpuls zu versorgen und somit eine Minimierung der Leistungselektronik zu erreichen.

Durch die Anordnung verschiedener Heizwiderstände in verschiedenen Ebenen kann ein hohes Maß an Formatflexibilität erreicht werden.

Durch die Verwendung der partiellen Aufheizung/Erwärmung des Kunststoffs ist es möglich, die Wanddickenverteilung bei der Formung zu beeinflussen und auf die Verwendung von Verstreckstempeln beim Thermoformen bei Erhalt einer gleichmäßigen Wanddickenverteilung zu verzichten. Die Wanddickenverteilung kann allein durch die Temperaturverteilung über die Heizbereiche gesteuert werden. Weiterhin kann die energetische Effizienz des Vorwärmvorgangs durch die gezielte Energieleitung verbessert werden.
Im Vergleich zu den mit Strahlerheizungen realisierten partiellen Aufheizmethoden hat das Absorptionsvermögen eines thermoplastischen Halbzeugs keinen Einfluss auf dessen Erwärmung. Bei der Nutzung von Wärmekontaktheizungen hat die Wärmeleitfähigkeit im Halbzeug einen maßgeblichen Einfluss auf das Aufheizverhalten, wodurch z.B. hohe Temperaturgradienten erreicht werden können, wodurch wiederum die Realisierung äußerst definierter Temperaturfelder begünstigt wird.
Die Realisierung eines Multilayeraufbaus ermöglicht ein hohes Maß an Funktionsintegration. So können z.B. hochauflösende Sensoren direkt an der Wirkstelle platziert oder auch durch thermische Leit- oder Isolationsebenen hohe Temperaturgradienten erreicht werden.
Die Form eines "Matrixheizers" gemäß der Erfindung ermöglicht ein hohes Maß an Formatflexibilität. Dies trägt maßgeblich zur Flexibilisierung von Vorwärmstationen in Kunststoffverarbeitungsanlagen und damit zur Minimierung von Rüstzeiten bei. Darüber hinaus kann durch eine Inline-Erfassung von Qualitätsmerkmalen des Formproduktes und Rückführung in die Maschinensteuerung, aktiv auf Qualitätsschwankungen durch lokales Anpassen des Temperaturprofiles reagiert werden.
Durch die Nutzung der Temperaturabhängigkeit des elektrischen Widerstands der Heizwiderstände als Messgröße für die Heizertemperatur kann auf den Einsatz von Temperaturfühlern für die Steuerung verzichtet werden. Damit kann der Energieeintrag direkt erfasst und gesteuert werden.
Beim Design der Heizwiderstände kann die Position und Dimensionierung der elektrischen Leiterbahnen so projektiert werden, dass die jeweilige Heizleistung an den gewünschten Positionen erreicht werden kann. Durch die geringe Größe und die thermische Entkopplung von den Trägerbauteilen weist eine erfindungsgemäße Vorrichtung eine geringe Wärmekapazität auf. Es ist somit eine hocheffiziente und hochdynamische Temperaturführung beim Aufheizen von Vorformkörpern und Halbzeugen möglich.

Nachfolgend wird die erfindungsgemäße Vorrichtung anhand von Figuren und Ausführungsbeispielen näher erläutert. Dabei können einzelne technische Merkmale oder Ausführungen der unterschiedlichen Beispiele miteinander kombiniert werden. Dementsprechend ist es möglich die Übertragung von Temperaturprofilen auf einen Vorformkörper oder Halbzeugen durch Kontakterwärmung mit einer lokal differenzierten Erwärmung unter Nutzung von Konvektion und/oder thermischer Strahlung zu kombinieren. Dabei können Oberflächenbereiche durch Kontakterwärmung und andere Oberflächenbereiche eines Vorformkörpers oder Halbzeugs durch Konvektion und/oder thermische Strahlung erwärmt werden.

Es zeigen:
Figur 1: eine Schnittdarstellung eines Beispiels der erfindungsgemäßen Vorrichtung mit koaxialen Grundkörpern;
Figur 2: eine Schnittdarstellung eines Beispiels mit einem Grundkörper;
Figur 3: eine schematische Darstellung eines Beispiels von mehreren geometrisch flächig angeordneten Leiterschleifen mehrerer Heizwiderstände;
Figur 4: mehrere Schnittdarstellungen eines Anwendungsbeispiels "Streckblasvorgang" mit Reckstange;
Figur 5: eine schematische Schnittdarstellung eines Beispiels, bei dem eine berührungslose Übertragung eines Temperaturprofils auf äußere Oberflächenbereiche eines Vorformköpers erreichbar ist;
Figur 6: eine schematische Schnittdarstellung eines Beispiels, bei dem eine berührungslose Übertragung eines Temperaturprofils auf äußere und innere Oberflächenbereiche eines Vorformköpers erreichbar ist;
Figur 7 eine Schnittdarstellung durch einen bei der Erfindung einsetzbaren Grundkörper;
Figur 8 eine Draufsicht auf ein Beispiel eines Grundkörpers kreisringförmigen Heizwiderständen und einem einzelnen kreisringförmigen Heizwiderstand und
Figur 9 eine Draufsicht auf einen Grundkörper mit Heizwiderständen, die in einer Reihen- und Spaltenanordnung (Arrayanordnung) angeordnet sind sowie einen einzelne Heizwiderstand mit mäanderförmiger elektrischer Leiterbahn.

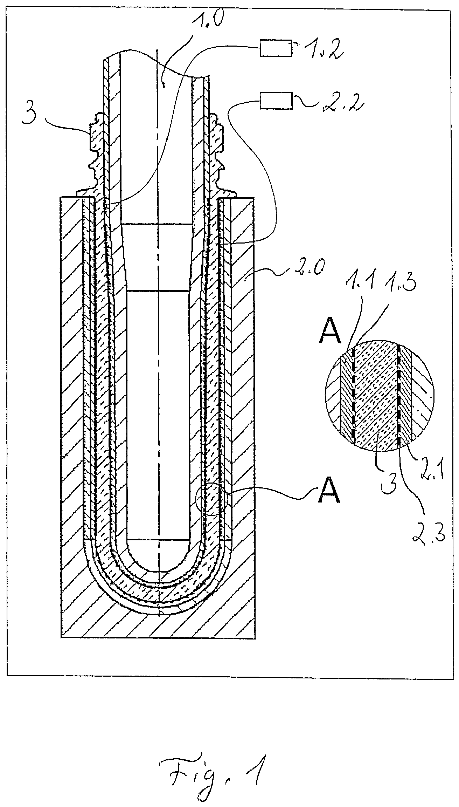

Figur 1 zeigt eine Schnittdarstellung der erfindungsgemäßen Vorrichtung zum Beheizen eines Vorformkörpers 3, bei der der Vorformkörper 3 zwischen zwei koaxial angeordneten Grundkörpern 1.0 und 2.0 gehalten ist. Wie mit dem Bildausschnitt A dargestellt ist, weist der Grundkörper 1.0 eine erste Schicht 1.1 und eine Kontaktschicht 1.3 auf. Auf der Oberfläche des gegenüberliegenden Grundkörpers 2.0 sind ebenfalls eine erste Schicht 2.1 und eine Kontaktschicht 2.3 ausgebildet. In jeweils beiden ersten Schichten 1.1 und 2.1 der Grundkörper 1.0 und 2.0 ist jeweils ein elektrischer Heizwiderstand in Form einer flächig geometrisch angeordneten Leiterschleife ausgebildet. Beide Grundkörper 1.0 und 2.0 weisen weiterhin Kontaktelemente (nicht gezeigt) auf, über die die Heizwiderstände jeweils mit einer Stromquelle 1.2 und 2.2 unabhängig voneinander verbunden sind. Bei Anlegen eines regelbaren elektrischen Stroms an die Heizwiderstände der Grundkörper 1.0 und 2.0 sind infolge der jeweils geometrisch angeordneten Leiterschleifen jeweils definierte Temperaturprofile generierbar, die über jeweils die äußere auf der ersten Schicht 1.1 und 2.1 ausgebildeten Kontaktschicht 1.3 und 2.3 durch den Kontakt mit der Oberfläche des Vorformkörpers 3, auf den Vorformkörper 3 zumindest überwiegend durch Wärmeleitung übertragbar ist.

Im vorliegenden Beispiel handelt es sich bei dem Vorformling um ein Preform einer PET (Polyethylenterephthalat)-Flasche, wobei das auszuformende Preform vollständig von dem als Dorn ausgeführten Grundkörper 1.0 und dem als Buchse ausgeführten Grundkörper 2.0 umschlossen ist. Die dabei erreichbaren Aufheizraten ermöglichen einen Impulsbetrieb, der über die Stromquellen 1.2 und 2.2 gesteuert werden kann. Dadurch kann während Übergabe-oder Leertakten Energie eingespart werden.

Die jeweils ersten Schichten 1.1 und 1.2 sowie die Kontaktschichten 1.3 und 2.3 sind aus thermisch leitfähigen Polymerwerkstoffen gebildet, die einen Anpressdruck auf die Oberfläche des Vorformkörpers 3 kompensieren. Die Leiterschleifen der Heizwiderstände sind dabei jeweils flächig mäanderförmig in den Schichten 1.1 und 2.1 angeordnet bzw. eingebettet.

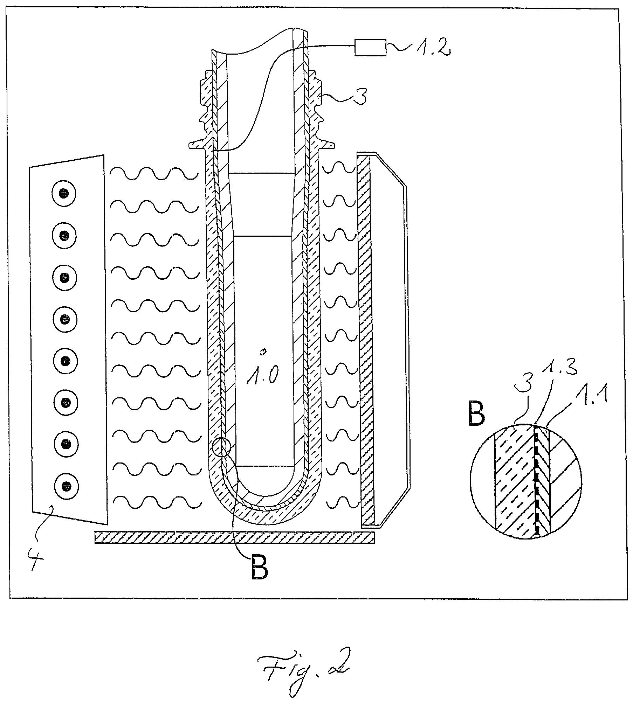

Die Figur 2 zeigt ein weiteres Ausführungsbeispiel, wobei lediglich ein als Dorn ausgebildeter Grundkörper 1.0 zur Übertagung eines Temperaturprofils auf die innere Oberfläche eines Vorformkörpers 3 eingesetzt wird. Bei diesem Ausführungsbeispiel ist eine direkte Kombination mit einer weiteren Heizquelle 4 zum hybriden Aufwärmen des Vorformlings 3 vorgesehen. Die weitere Heizquelle 4 ist im vorliegenden Fall als Infrarotstrahler ausgebildet, mit dessen Strahlungsenergie die äußere Oberfläche des Vorformlings beheizbar ist.

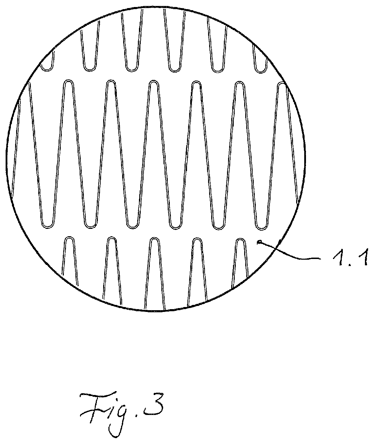

Figur 3 zeigt einen Ausschnitt der Schicht 1.1 in der mehrere Leiterschleifen mehrerer Heizwiderstände geometrisch flächig angeordnet sind. Über Kontaktelemente (nicht gezeigt) ist jede der drei dargestellten Leiterschleifen separat mit einer elektrischen Stromquelle verbunden (nicht gezeigt), mit der die Leiterschleifen unabhängig voneinander mit elektrischem Strom versorgt werden können. Im vorliegenden Beispiel sind die Leiterschleifen flächig wellenförmig ausgebildet. Es sind jedoch auch weitere flächige, beispielsweise spiralförmige geometrische Strukturen der Leiterschleifen denkbar, wobei die flächigen Strukturen regelmäßig oder unregelmäßig flächig verteilt angeordnet sein können.

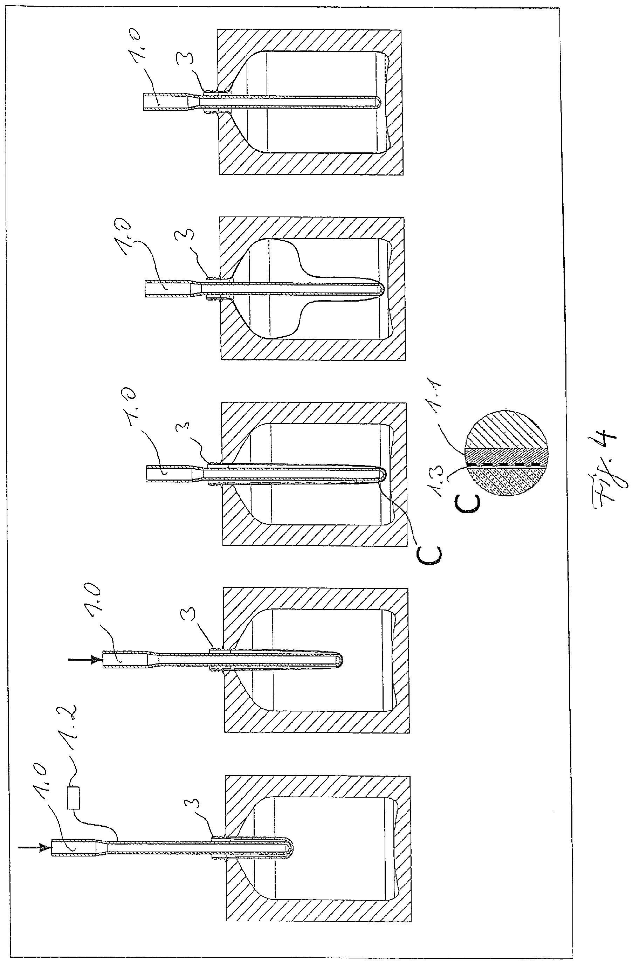

Mit der Figur 4 ist ein Ausführungsbeispiel dargestellt, bei dem der Grundkörper 1.0 als Reckstange ausgebildet ist, die zur Anwendung im Streckblasprozess kommt. Wie der Bildausschnitt C verdeutlicht, ist die Reckstange 1.0 erfindungsgemäß mit einer ersten Schicht 1.1 und einer Kontaktschicht 1.3 ausgebildet, wobei die erste Schicht 1.1 einen Heizwiderstand aufweist, dessen Leiterschleife spiralförmig um die Reckstange 1.0 gewickelt ist. Im vorliegenden Beispiel sind die Wicklungen der Leiterschleife um die Reckstange 1.0 im Kopfbereich der Reckstange 1.0 konzentriert. Über nicht gezeigte Kontaktelemente an der Reckstange 1.0, ist der Heizwiderstand mit einer regelbaren Stromquelle 1.2 verbunden. Mit einem regelbaren Vorschub wird die Reckstange 1.0 in Pfeilrichtung bewegt, wobei der Vorformling 3 in Pfeilrichtung gedehnt wird, bis eine Vorschubendposition erreicht ist. Dadurch, dass das Temperaturprofil im Kopfbereich der Reckstange 1.0 ausgebildet ist, können die Vorformeigenschaften während des Vorschubs, d.h. während der Dehnung des Vorformlings 3 konstant gehalten werden. Des Weiteren ist es möglich, die Reckstange 1.0 im Gegensatz zu den heute meist mittels Fluid beheizen Reckstangen nur lokal und inhomogen zu temperieren.
Der Einsatz der erfindungsgemäßen Vorrichtung bleibt dabei nicht auf den Streckblasprozess beschränkt, sondern ist für Reck-/Streckeinrichtungen im Allgemeinen, z.B. auch für die mechanische Vorstreckung durch Stempel in Thermoformprozessen geeignet.

In einer weiteren vorteilhaften Ausführungsform ist die erfindungsgemäße Vorrichtung auch im kombinierten Spritzguss-, Streckblasformprozess als Temperiersystem anwendbar. Erster und zweiter Grundkörper, d.h. Dorn und Buchse können dabei so ausgebildet sein, dass sie gemeinsam als vollständige Gießform oder einzeln als Bestandteil einer Gießform dienen. So kann der Mehrschichtverbund aus der mindestens einen ersten Schicht und der Kontaktschicht lediglich partiell auf der Oberfläche einer Kavität eines Grundkörpers ausgebildet sein. Die genannten Ausführungsformen können so im kombinierten Spritzguss-Streckblasprozess Einsatz finden. Dabei wird eine Kunststoffschmelze zunächst direkt auf die definiert differenziert beheizte Kontaktschicht aufgespritzt, wobei die geometrische Form der Kontaktschicht als Spritzgussform dient. Da der Mehrschichtverbund aus mindestens der ersten Schicht und der Kontaktschicht eine nur geringe thermische Masse aufweist, muss zur Abkühlung der Formmasse (Kunststoffmasse) auch weniger Energie abgeführt werden.

Dem Abkühlprozess nachgelagert kann die Temperierung des Vorformlings entsprechend der Prozessparameter und des vorgegebenen Temperaturprofils erfolgen. Durch die mehrteilig ausgeführte Buchse kann der temperierte Vorformling anschließend in eine Streckblasform überführt und ausgeformt werden.

Der Dorn kann dabei zusätzlich zur Wärmeeinbringung von der Innenseite des Vorformlings vorteilhafterweise auch als Reckstange im Streckblasprozess dienen. Durch die weiterhin temperierbare Oberfläche kann auch während des Reckvorganges eine lokale Temperierung vorgenommen werden. Ist der Mehrschichtverbund aus porösem, luftdurchlässigem Material gefertigt, kann zusätzlich die zur Ausformung notwendige Druckluft in den Innenraum der Vorformling eingeleitet werden.

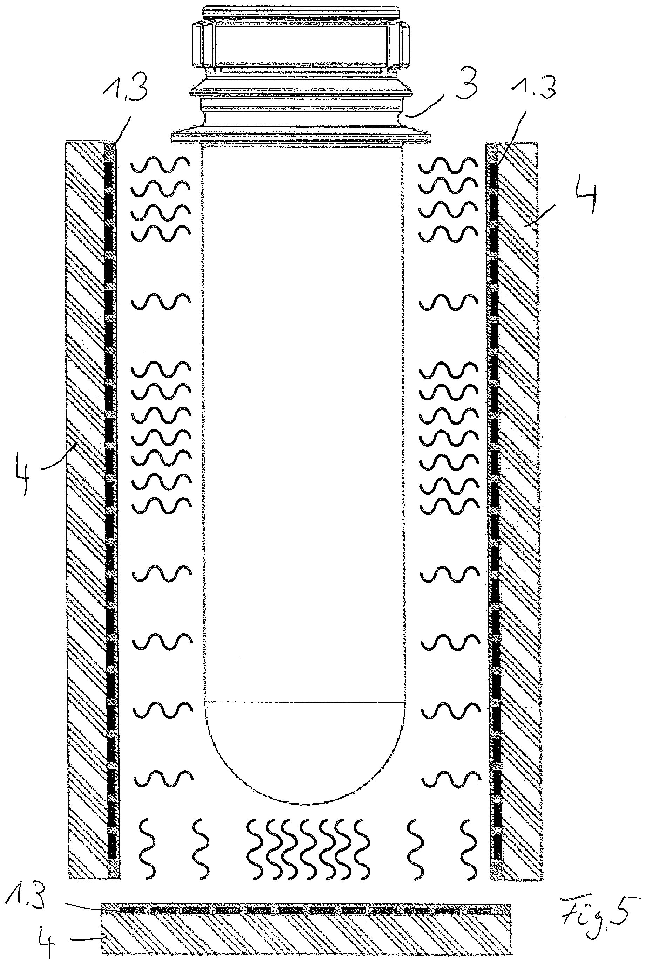

Bei dem in Figur 5 gezeigten Beispiel kann ein Vorformkörper 3 zwischen zwei parallel zueinander ausgerichteten Elementen 4 translatorisch bewegt werden. Dabei verläuft die Bewegungsrichtung in die Zeichnungsebene hinein oder entgegengesetzt dazu. An der Unterseite ist ein weiteres Element 4 angeordnet. Die Elemente 4 sind mit Kontaktschichten 1.3 versehen. Wie mit den gewellten Linien dargestellt werden die Kontaktschichten 1.3 lokal differenziert angesteuert, so dass lokal unterschiedliche elektrische Energie für eine Erwärmung durch Konvektion oder thermische Strahlung vorliegt. In Bereichen, in denen die gewellten Linien dichter beieinander angeordnet sind, kann eine höhere Temperatur am Vorformkörper 3 erreicht werden, als in Bereichen, in denen die Abstände der gewellten Linien größer sind. Es kann also bei diesem Beispiel ein gewünschtes Temperaturprofil durch berührungslose Erwärmung am Vorformköper übertragen werden. Die Erwärmung erfolgt dabei von der äußeren Oberfläche.

Bei der translatorischen Bewegung kann zusätzlich eine Drehung des Vorformkörpers 3 durchgeführt werden, die um seine mittlere Längsachse, die parallel zu den beiden gegenüberliegend angeordneten Elementen 4 ausgerichtet ist, erfolgt.

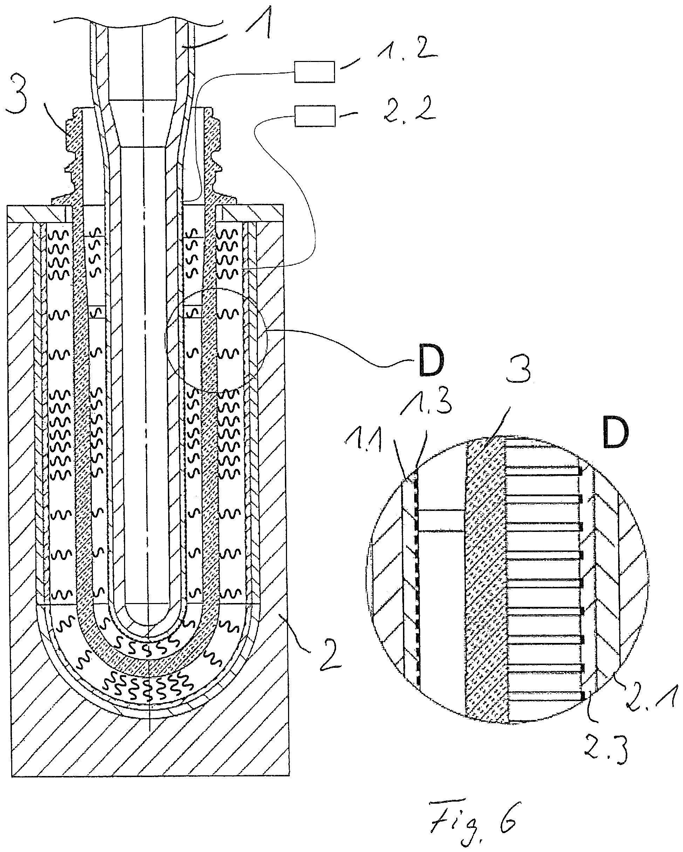

Bei dem in Figur 6 gezeigten Beispiel erfolgt die Erwärmung und Übertragung eines gewünschten günstigen Temperaturprofils auf einen Vorformkörper 3 nicht nur von seiner äußeren Oberfläche. Es ist zusätzlich ein Dorn als Grundkörper 1 vorhanden, der durch eine Öffnung in das Innere des Vorformkörpers 3 eingeführt werden kann. Auch bei diesem Beispiel erfolgt die Erwärmung mit Übertragung eines gewünschten Temperaturprofils durch Konvektion und/oder thermische Strahlung, die von Kontaktschichten 1.3 und 2.3 ausgeht. Auch hier ist mit den gewellten Linien die lokal differenzierte Erwärmung des Vorformköpers 3 verdeutlicht.

Ansonsten sind gleiche Elemente mit den gleichen Bezugszeichen, wie bei anderen Figuren gekennzeichnet.

Die Figur 7 zeigt eine Schnittdarstellung eines mehrschichtig ausgebildeten Grundkörpers 1.0. Dabei sind mehrere Heizwiderstände 5 unmittelbar unter einer Kontaktschicht 1.1 ausgebildet, die antihaftend und flexibel zur Kontaktverbesserung ausgebildet ist. Soll Strahlung oder Konvektion genutzt werden sollte die Kontaktschicht 1.1 einen angepassten Emissionskoeffizienten aufweisen.

Die Heizwiderstände 5 sind elektrische Leiterbahnen, die aus Silber durch Aufdrucken einer silberhaltigen Paste auf ein keramisches Substrat, beispielsweise eine Platte aus LTCC- oder HTCC-Keramik, ausgebildet worden sind. Die elektrisch leitende Verbindung der Heizwiderstände 5 und weiterer eine elektrische Verbindung erfordernde Elemente 6, wie z.B. Temperatursensoren oder Peltierelemente kann mittels an sich bekannter Durchkontaktierungen 5.2, 5.3 hergestellt werden. In nicht dargestellter Form können auch weitere Heizwiderstände in weiteren Ebenen vorhanden sein. Die dann bevorzugt versetzt zu den dargestellten Heizwiderständen 5, die direkt unterhalb der Kontaktschicht 1.1 angeordnet sind, angeordnet werden können.

In einer Ebene unterhalb der Heizwiderstände 5 sind bei diesem Beispiel Temperatursensoren 6 angeordnet. In einer Ebene darunter ist hier eine durchgehende Reflexions- oder Sperrschicht 7, die aus einem Metall gebildet sein und den Wirkungsgrad erhöhen kann, angeordnet.

Darunter wiederum ist eine Schicht 8 zur Kühlung angeordnet, durch die ein Kühlmedium, z.B. Luft oder Wasser durch Kanäle 9.1 hindurch geführt werden kann oder dort Peltierelemente 9.2 angeordnet sein können. Daran schließt sich bei diesem Beispiel eine poröse Schicht 10 zur thermischen Entkopplung und ggf. zur Realisierung einer Gasdurchlässigkeit, um Druckdifferenzen ausnutzen zu können. Die in Figur 7 gezeigten Temperatursensoren 6, die Schicht 8 zur Kühlung, die Kanäle 9.1 und die Peltierelemente 9.2 des entsprechenden Ausführungsbeispiels sind nicht Teil der Erfindung.

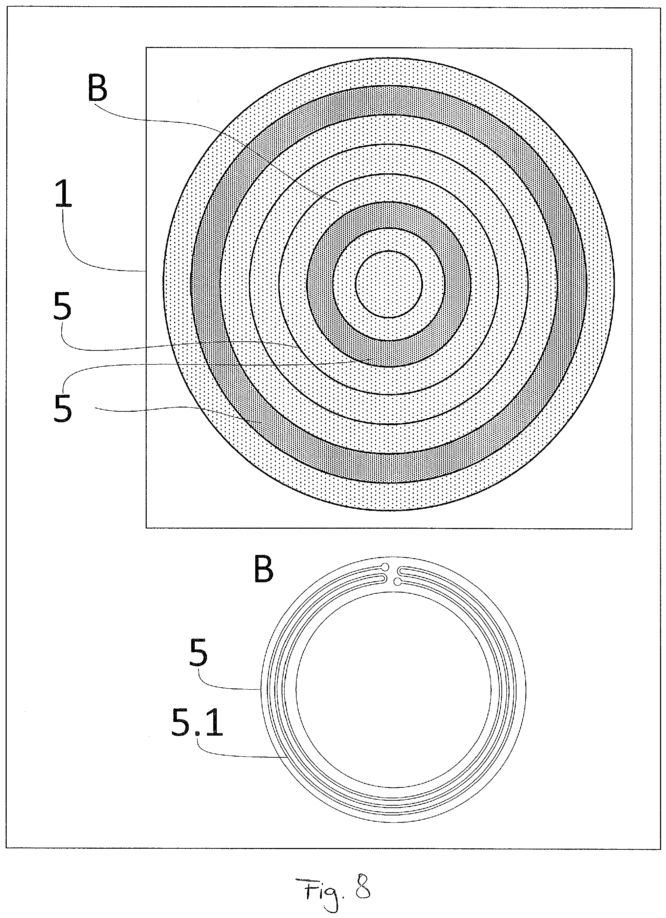

Die Figur 8 zeigt beispielhaft eine Möglichkeit zur Ausbildung eines Grundkörpers 1 in einer Draufsicht mit kreisringförmigen Heizwiderständen 5 und einem zentralen kreisförmigen Heizwiderstand 5. Die Heizwiderstände 5 sind, wie in der unteren Darstellung gezeigt mit elektrischen Leiterbahnen 5.1 aus Silber mit einer Breite von 0,02 mm und einer Dicke von 10 µm gebildet. Sie können jeweils einzeln angesteuert werden, so dass sie zeitlich versetzt zueinander mit elektrischer Spannung zur lokal differenzierten Erwärmung beaufschlagt werden können, was mit den unterschiedlichen Tönen in der Zeichnung angedeutet ist. Es können aber auch mehrere Heizwiderstände 5 gleichzeitig mit elektrischer Spannung beaufschlagt werden, wobei jedoch unterschiedliche Energien an einzelnen Heizwiderständen 5 zum Einsatz kommen. Dabei ist es möglich, mehrere Heizwiderstände 5 mit einem gemeinsamen Regler unterschiedlich anzusteuern.

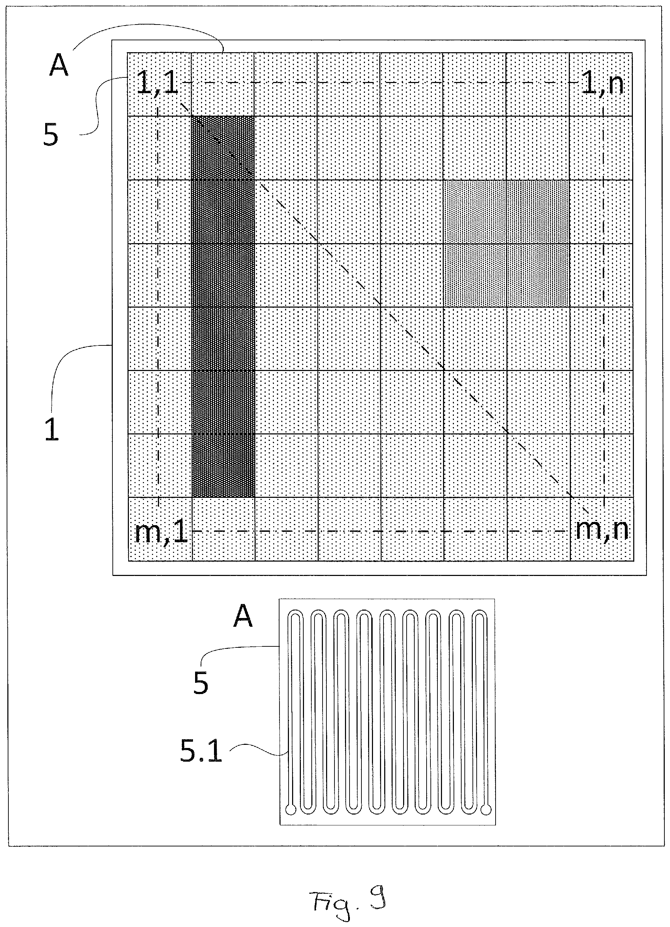

Die Figur 9 zeigt ein Beispiel eines Grundkörpers 1 in einer Draufsicht, bei der eine Vielzahl von Heizwiderständen 5 in einer Reihen- und Spaltenanordnung mit n-Reihen und m-Spalten vorhanden sind. Auch diese Heizwiderstände 5 können jeweils einzeln, wie beim Beispiel nach Figur 8 und gemäß dem allgemeinen Teil der Beschreibung angesteuert werden. Sie sind jeweils einzeln kontaktiert. Bei diesem Beispiel sind die einzelnen Heizwiderstände 5 mit mäanderförmig ausgebildeten elektrischen Leiterbahnen 5.1 gebildet.
Generell kann festgehalten werden, dass nebeneinander angeordnete Heizwiderstände 5 in Abhängigkeit der lokal gewünschten Temperatur und der momentanen Temperatur an einem oder zumindest in seiner Nähe betrieben werden können. Durch zeitlich versetzte Aktivierung benachbarter Heizwiderstände 5 kann auch die thermische Leitung zur Erwärmung genutzt und dadurch die erforderliche Gesamtenergie reduziert werden.

## Patentansprüche

1. Vorrichtung zum Beheizen von Vorformkörpern aus thermoplastischem Kunststoff für die Anwendung beim Blasumformen oder Thermoformen,
mit einem Grundkörper (1.0) und einem weiteren Grundkörper (2.0), auf deren Oberfläche mindestens eine erste Schicht (1.1, 2.1) ausgebildet ist, die mehrere elektrische Heizwiderstände (5) in Form flächig geometrisch angeordneter Leiterschleifen aufweist, wobei
die Grundkörper (1.0, 2.0) weiterhin Kontaktelemente aufweisen, über die die Heizwiderstände (5) mit einer Stromquelle (1.2, 2.2) verbindbar sind
und
die elektrischen Heizwiderstände (5) aus einem dotierten Keramik-, Polymerwerkstoff oder mit einer elektrisch leitenden Metall- oder Oxidschicht gebildet und auf einer elektrisch isolierenden Trägerschicht aufgebracht sind, die auf einer dem Grundkörper (1.0, 2.0) zugewandten Seite elektrisch isoliert ist
und
die elektrischen Heizwiderstände (5) eine Dicke im Bereich 1 µm bis 100 µm und eine Breite im Bereich 0,001 mm bis 5 mm aufweisen
und
mehrere Heizwiderstände (5) jeweils einzeln ansteuerbar sind
wobei
ein definiertes Temperaturprofil mit lokal differenzierter Temperaturverteilung generierbar ist, das über eine äußere auf der ersten Schicht (1.1, 2.1) ausgebildete Kontaktschicht (1.3, 2.3) auf den Vorformkörper (3) übertragbar ist und,
wobei die äußere Kontaktschicht (1.3, 2.3) mit mindestens einem Teilbereich der Oberfläche des Vorformkörpers (3) korrespondiert
**dadurch gekennzeichnet, dass**
zumindest die Grundkörper (1.0, 2.0) aus einem keramischen Werkstoff gebildet sind und elektrisch leitende Verbindungen mittels Durchkontaktierungen im Werkstoff erreicht sind.

2. Vorrichtung nach Anspruch 1, **dadurch gekennzeichnet, dass** die Leiterschleifen der elektrischen Heizwiderstände (5) bahnförmig, mäanderförmig oder spiralförmig auf der Oberfläche der Grundkörper (1.0, 2.0) ausgebildet sind.

3. Vorrichtung nach einem der vorhergehenden Ansprüche, **dadurch gekennzeichnet, dass** die Leiterschleifen der elektrischen Heizwiderstände (5) direkt auf der Oberfläche der Grundkörper (1.0, 2.0) aufgedruckt sind.

4. Vorrichtung nach einem der vorhergehenden Ansprüche, **dadurch gekennzeichnet, dass** die Heizwiderstände (5) pulsförmig und/oder in Abhängigkeit der jeweiligen Temperatur im Bereich eines jeweiligen Heizwiderstands oder im Bereich von benachbarten Heizwiderständen (5) ansteuerbar sind.

5. Vorrichtung nach dem vorhergehenden Anspruch, **dadurch gekennzeichnet, dass** zumindest die Grundkörper (1.0, 2.0) aus einer LTCC-oder HTCC-Keramik gebildet sind.

6. Vorrichtung nach einem der vorhergehenden Ansprüche, **dadurch gekennzeichnet, dass** mindestens ein Grundkörper (1.0, 2.0) aus mehreren miteinander verbindbaren Einzelmodulen gebildet ist und auf den Einzelmodulen jeweils mindestens ein Heizwiderstand (5) vorhanden ist.

7. Vorrichtung nach dem vorhergehenden Anspruch, **dadurch gekennzeichnet, dass** der Vorformkörper (3) zwischen mit Kontaktschichten (1.3, 2.3) versehenen Elementen (4) hindurch, hinein und/oder ein Grundkörper (1) in einen Vorformkörper (3) hinein bewegbar ist.

8. Vorrichtung nach einem der vorhergehenden Ansprüche, **dadurch gekennzeichnet, dass** Kontaktschichten (1.3, 2.3) so ausgebildet, mit einer Beschichtung versehen und/oder so betreibbar sind, dass thermische Strahlung in einem Wellenlängenbereich emittiert wird, die zu mindestens 50 % vom Werkstoff des Vorformkörpers (3) absorbiert wird.

## Claims

1. Device for heating preform bodies composed of thermoplastic material for application in blow moulding or thermoforming,
comprising a main body (1.0) and a further main body (2.0), on the surface of which is formed at least one first layer (1.1, 2.1) having a plurality of electrical heating resistors (5) in the form of conductor loops arranged in a planar/plane geometric fashion, wherein
the main bodies (1.0, 2.0) furthermore have contact elements via which the heating resistors (5) are connectable to a power source (1.2, 2.2)
and
the electrical heating resistors (5) are formed from a doped ceramic material, polymer material or with an electrically conductive metal layer or oxide layer and are applied on an electrically insulating carrier layer, which is electrically insulated on a side facing the main body (1.0, 2.0),
and
the electrical heating resistors (5) have a thickness in the range of 1 µm to 100 µm and a width in the range of 0.001 mm to 5 mm
and
a plurality of heating resistors (5) are each individually controllable,
wherein
a defined temperature profile with a locally differentiated temperature distribution is able to be generated and is able to be transferred to the preform body (3) via an outer contact layer (1.3, 2.3) formed on the first layer (1.1, 2.1), and wherein the outer contact layer (1.3, 2.3) corresponds to at least one partial region of the surface of the preform body (3),
**characterized in that**
at least the main bodies (1.0, 2.0) are formed from a ceramic material and electrically conductive connections are achieved by means of plated-through holes in the material.

2. Device according to Claim 1, **characterized in that** the conductor loops of the electrical heating resistors (5) are formed in the shape of paths, in a meandering fashion or spirally on the surface of the main bodies (1.0, 2.0).

3. Device according to either of the preceding claims, **characterized in that** the conductor loops of the electrical heating resistors (5) are printed directly on the surface of the main bodies (1.0, 2.0).

4. Device according to any of the preceding claims, **characterized in that** the heating resistors (5) are controllable in a pulsed manner and/or in a manner dependent on the respective temperature in the region of a respective heating resistor or in the region of adjacent heating resistors (5).

5. Device according to the preceding claim, **characterized in that** at least the main bodies (1.0, 2.0) are formed from an LTCC or HTCC ceramic.

6. Device according to any of the preceding claims, **characterized in that** at least one main body (1.0, 2.0) is formed from a plurality of individual modules that are connectable to one another, and at least one heating resistor (5) is present on each of the individual modules.

7. Device according to the preceding claim, **characterized in that** the preform body (3) is movable between, through or into, elements (4) provided with contact layers (1.3, 2.3) and/or a main body (1) is movable into a preform body (3).

8. Device according to any of the preceding claims, **characterized in that** contact layers (1.3, 2.3) are embodied such, provided with a coating and/or operable such that thermal radiation is emitted in a wavelength range, at least 50% of which radiation is absorbed by the material of the preform body (3).

## Revendications

1. Dispositif de chauffage de préformes en matériau synthétique thermoplastique pour l'utilisation lors du formage par soufflage ou du thermoformage,
avec un corps de base (1.0) et un autre corps de base (2.0) sur la surface desquels est constituée au moins une première couche (1.1, 2.1) qui comporte plusieurs résistances chauffantes (5) électriques sous la forme de boucles conductrices disposées géométriquement à plat,
les corps de base (1.0, 2.0) comportant en outre des éléments de contact par le biais desquels les résistances chauffantes (5) peuvent être connectées à une source de courant (1.2, 2.2),
et
les résistances chauffantes (5) électriques étant formées d'un matériau polymère, céramique dopé ou d'une couche de métal ou d'oxyde électriquement conductrice, et étant mises en place sur une couche de support électriquement isolante qui est électriquement isolée sur un côté tourné vers le corps de base (1.0, 2.0)
et
les résistances chauffantes (5) électriques présentant une épaisseur dans la plage de 1 µm à 100 µm, et une largeur dans la plage de 0,001 mm à 5 mm
et
plusieurs résistances chauffantes (5) pouvant être commandées respectivement individuellement,
un profil de température défini avec une répartition de température localement différenciée pouvant être généré, lequel peut être transféré à la préforme (3) par le biais d'une couche de contact (1.3, 2.3) extérieure constituée sur la première couche (1.1, 2.1), et
la couche de contact (1.3, 2.3) extérieure correspondant à au moins une zone partielle de la surface de la préforme (3),
**caractérisé en ce**
**qu'**au moins les corps de base (1.0, 2.0) sont formés d'un matériau céramique, et des connexions électriquement conductrices sont obtenues au moyen de trous d'interconnexion dans le matériau.

2. Dispositif selon la revendication 1, **caractérisé en ce que** les boucles conductrices des résistances chauffantes (5) électriques sont constituées en forme de pistes, sous forme méandreuse ou en spirale sur la surface des corps de base (1.0, 2.0).

3. Dispositif selon l'une des revendications précédentes, **caractérisé en ce que** les boucles conductrices des résistances chauffantes (5) électriques sont imprimées directement sur la surface des corps de base (1.0, 2.0).

4. Dispositif selon l'une des revendications précédentes, **caractérisé en ce que** les résistances chauffantes (5) peuvent être commandées par impulsions et/ou en fonction de la température respective dans la zone d'une résistance chauffante respective ou dans la zone de résistances chauffantes (5) voisines.

5. Dispositif selon la revendication précédente, **caractérisé en ce qu'**au moins les corps de base (1.0, 2.0) sont formés d'une céramique LTCC ou HTCC.

6. Dispositif selon l'une des revendications précédentes, **caractérisé en ce qu'**au moins un corps de base (1.0, 2.0) est formé de plusieurs modules individuels pouvant être connectés les uns aux autres, et **en ce que** respectivement au moins une résistance chauffante (5) est présente sur les modules individuels.

7. Dispositif selon la revendication précédente, **caractérisé en ce que** la préforme (3) peut être déplacée entre des éléments (4) munis de couches de contact (1.3, 2.3), à travers ces éléments, vers l'intérieur de ces éléments et/ou un corps de base (1) peut être déplacé vers l'intérieur d'une préforme (3).

8. Dispositif selon l'une des revendications précédentes, **caractérisé en ce que** des couches de contact (1.3, 2.3) sont constituées de telle sorte, munies d'un revêtement de telle sorte, et/ou peuvent être utilisées de telle sorte qu'un rayonnement thermique est émis dans une plage de longueurs d'onde et est absorbé à au moins 50 % par le matériau de la préforme (3).
